# EUROPÄISCHE PATENTSCHRIFT

(11) **EP 3 024 723 B1**
(45) Veröffentlichungstag und Bekanntmachung des Hinweises auf die Patenterteilung: **10.05.2017**
(21) Anmeldenummer: 14721193.2
(22) Anmeldetag: 10.03.2014
(51) Int. Cl.: B64C 11/06, F16C 19/18, F16C 33/66

(54) **PROPELLERBLATTLAGERUNG**
PROPELLER BLADE BEARING
ROULEMENT DE PALE D'HÉLICE

(30) Priorität: 22.07.2013 DE 102013214240
(43) Veröffentlichungstag der Anmeldung: 01.06.2016
(73) Patentinhaber: Schaeffler Technologies AG & Co. KG, 91074 Herzogenaurach (DE)
(72) Erfinder: SEBALD, Wilhelm, 97631 Bad Königshofen (DE)
(86) Internationale Anmeldenummer: PCT/DE2014/200117
(87) Internationale Veröffentlichungsnummer: WO 2015/010691

(56) Entgegenhaltungen:
- DE-A1-102004 060 022
- GB-A- 640 852
- GB-A- 2 244 525

## Beschreibung

### Gebiet der Erfindung

Die Erfindung betrifft eine Propellerblattlagerung für verstellbare Propellerblätter von Flugzeugen, wobei die Propellerblätter durch Wälzlagerungen um ihre jeweilige Längsachse verschwenkbar sind.

### Hintergrund der Erfindung

Eine Lageranordnung, mit der Propellerblätter eines Flugzeugpropellers an einer Nabe verstellbar gelagert sind, ist zum Beispiel aus der DE 10 2004 060 022 A1 bekannt. Die Lageranordnung ist aus einem Primär- und einem Sekundärverstelllager aufgebaut, welche jeweils als Kugellager ausgebildet und Komponenten einer vormontierten Baueinheit sind. Ein Schmiermittel ist größtenteils in der Lageranordnung gespeichert und wird unter anderem durch Schmierölschwallringe, welche Lagerringe umschließen, innerhalb eines bestimmten Volumens gehalten.

Eine Vorrichtung zur Propellerblattverstellung, welche eine Wälzlageranordnung mit Kugeln und Rollen als Wälzkörper umfasst, ist zum Beispiel aus der GB 2 244 525 A bekannt. Zwischen einer ersten, aus Kugeln gebildeten Wälzkörperreihe und einer zweiten, aus Rollen gebildeten Wälzkörperreihe ist hierbei eine Vorspannkraft aufgebracht. Entsprechend der aus der DE 10 2004 060 022 A1 bekannten Lageranordnung ist auch in diesem Fall ein verstellbares Propellerblatt mit Innenringen der Lagerung verbunden, während sich die zugehörigen Außenringe an der Nabe befinden.

Die Verstellbarkeit von Propellerblättern ist insbesondere bei Propfan-Triebwerken gefordert. Ein Beispiel eines ummantelten Propfan-Triebwerks mit verstellbaren Schaufeln ist in der DE 38 18 466 C1 offenbart. Die US 2012/0134822 A1 beschreibt dagegen ein nicht ummanteltes Propfan-Triebwerk.

Propfan-Triebwerke sind Flugzeugantriebe, welche zur Steigerung der Effizienz gegenüber älteren Triebwerksbauarten ein besonders hohes Nebenstromverhältnis aufweisen. Hierbei wird ein hoher Luftdurchsatz durch Propellerblätter erzeugt, welche sich, wie aus dem genannten Stand der Technik bekannt, entweder innerhalb einer Ummantelung oder außerhalb eines jeglichen Gehäuses befinden können. Zur Anpassung der Antriebsleistung an die aktuelle Flugsituation bei möglichst konstanter Drehzahl des Antriebsmotors wird der Anstellwinkel der Propellerblätter durch Verdrehung um ihre Achse verstellt. Jedes Propellerblatt ist zu diesem Zweck mittels einer Wälzlagerung drehbar mit der Nabe des Propellers verbunden.

Zur Vermeidung von Verschleiß in den Kontaktstellen der Wälzelemente befindet sich die Wälzlagerung typischerweise in einem vollständig mit Öl gefüllten Raum. Aufgrund der Drehbewegung des Rotors erfährt das System eine Zentrifugalbeschleunigung, die ungefähr dem 500-fachen oder mehr der normalen Erdbeschleunigung entsprechen kann. Die sichere Abdichtung des Ölraums unter dem entstehenden hydraulischen Druck hat essentielle Bedeutung für die Zuverlässigkeit und Haltbarkeit der Wälzlagerung und zur Vermeidung äußerlich sichtbarer Leckagen.

### Aufgabe der Erfindung

Der Erfindung liegt die Aufgabe zugrunde, eine gegenüber dem Stand der Technik weiterentwickelte, insbesondere für schnell drehende Antriebe von Flugzeugen geeignete, Propellerblattlagerung anzugeben, welche ein besonders einfach schmierbares, sowie montier- und wartbares Wälzlager aufweist.

### Beschreibung der Erfindung

Diese Aufgabe wird erfindungsgemäß gelöst durch eine Propellerblattlagerung mit den Merkmalen des Anspruchs 1.

Die Propellerblattlagerung weist eine Propellernabe, ein Propellerblatt und eine Wälzlagerung zwischen der Propellernabe und dem Propellerblatt auf, wobei
- mindestens ein Lageraußenring am Propellerblatt angeordnet ist, das heißt entweder Bestandteil des Propellerblatts oder mit diesem fest verbunden ist,
- mindestens ein Lagerinnenring an der Propellernabe angeordnet ist, das heißt entweder Bestandteil der Propellernabe oder an dieser befestigt ist,
- ein mit dem Propellerblatt fest verbundener hülsenförmiger Zentralabschnitt radial innerhalb des Lagerinnenrings der Wälzlagerung angeordnet ist,
- zwischen dem Lageraußenring und dem Zentralabschnitt eine in Radialrichtung, bezogen auf die Rotationsachse der Propellernabe, nach außen hin geschlossene Schmierstoffkammer gebildet ist.

Unter dem Begriff "Propellerblatt im weiteren Sinne" wird im vorliegenden Fall das gesamte an der Nabe verstellbar gelagerte Rotorblatt verstanden, auch wenn dieses aus mehreren Einzelteilen, beispielsweise einem Blattfuß und einem auf diesem befestigten Blatt, das heißt Propellerblatt im engeren Sinne, zusammengesetzt ist. Bei der Propellerblattlagerung handelt es sich um die Lagerung des Propellerblatts im weiteren Sinne an der Propellernabe.

Die Wälzlagerung der Propellerblattlagerung ist vorzugsweise als mehrreihiges, insbesondere zwei- oder dreireihiges, Lager ausgebildet. Die Wälzlagerung kann jedoch beispielsweise auch vier, fünf, oder sechs Wälzkörperreihen aufweisen. Als Wälzkörper kommen sowohl Kugeln als auch Nadeln, Zylinderrollen sowie Kegelrollen in Betracht. Auch eine Kombination verschiedener Wälzkörperformen und -größen innerhalb der Wälzlagerung ist möglich. Die Wälzkörper können aus Wälzlagerstahl oder einem keramischen Werkstoff, beispielsweise Siliziumnitrid, hergestellt sein. Wälzkörper können durch einen Käfig, durch jeweils mehrere Wälzkörper führende Käfigsegmente, oder durch jeweils zwischen zwei Wälzkörpern angeordnete Abstandselemente voneinander separiert sein. Als Käfigwerkstoffe sind Metalle sowie Kunststoffe, insbesondere faserverstärkte Kunststoffe, verwendbar.

In einer möglichen Ausführungsform ist die Wälzlagerung als dreireihiges Schrägkugellager gestaltet, wobei die drei Reihen an Wälzkörpern unterschiedlich weit von der Rotationsachse der Propellernabe entfernt sind. Mit dieser Ausgestaltung ist die Propellerblattlagerung hauptsächlich zur Aufnahme radial nach außen wirkender Kräfte ausgelegt. Durch eine Vorspannung zwischen den Wälzkörperreihen ist die Spielfreiheit der Propellerblattlagerung sichergestellt. Gleichzeitig werden mechanische Belastungen gleichmäßig auf die einzelnen Wälzkörperreihen verteilt und insgesamt niedrig gehalten.

In besonders vorteilhafter Ausgestaltung bildet die von der Rotationsachse der Propellernabe am geringsten beabstandete Reihe an Wälzkörpern des Kugellagers zusammen mit der dieser benachbarten, mittleren, zweiten Reihe an Wälzkörpern und den zugehörigen Lagerringen eine O-Anordnung, während die äußerste, das heißt dritte, von der Propellernabe am weitesten entfernte Reihe an Wälzkörpern unter einem Druckwinkel zwischen den Lagerringen angeordnet ist, dessen Ausrichtung dem Druckwinkel der mittleren Reihe an Wälzkörpern entspricht. In besonders bevorzugter Ausgestaltung stimmt der Druckwinkel der mittleren Wälzkörperreihe mit dem Druckwinkel der äußersten Wälzkörperreihe überein oder weicht hiervon um nicht mehr als 10°, insbesondere um nicht mehr als 5°, ab. In ähnlicher Weise kann die Wälzlagerung auch vier- oder mehrreihig aufgebaut sein, wobei der Druckwinkel der vierten und gegebenenfalls mindestens einen weiteren Wälzkörperreihe hierbei vorzugsweise dem Druckwinkel der dritten Wälzkörperreihe übereinstimmt.

Die zwei-, drei- oder mehrreihige Wälzlagerung kann einen einzigen Außenring und mehrere Innenringe aufweisen. Der einteilige Außenring kann hierbei mit Hilfe eines an diesen angeformten Befestigungsflansches mit dem Propellerblatt oder einem dieses haltenden Träger verbunden sein. Der Lageraußenring ist vorzugsweise aus Stahl gefertigt und weist eine Härte von 300 bis 500 HV1 sowie randschichtgehärtete Wälzkontaktflächen mit einer Härte von mehr als 700 HV1 auf. Der Umgebung ausgesetzte Flächen des Außenrings können eine Beschichtung zum Schutz gegen Korrosion aufweisen. Die Innenringe können auf einen Lagerzapfen, welcher eine Komponente der Nabe darstellt, aufgesetzt und dort zusammengespannt werden. Die Wälzkontaktflächen sämtlicher Lagerringe können eine verschleißbeständige Beschichtung oder Oberflächenbehandlung, insbesondere Carbonitrierung, aufweisen.

Ein besonderer Vorteil der radial nach außen hin geschlossenen Schmierstoffkammer ist darin gegeben, dass keine zwischen zueinander beweglichen Teilen wirkende Dichtung erforderlich ist, um ein Abfließen des Schmierstoffs in Radialrichtung, bezogen auf die Rotationsachse des Propellers, zu verhindern. Dichtungen zwischen zueinander beweglichen, nämlich verschwenkbaren, Teilen sind dagegen auf der radial inneren Seite, bezogen auf die Rotationsachse der Propellernabe, der Schmierstoffkammer anordenbar. Hierbei wirkt eine erste Dichtung zwischen dem Außenring und der Propellernabe, wobei diese erste, äußere Dichtung auf ihrer inneren Seite, bezogen auf die Längsachse des Propellerblatts, entweder direkt einen Lagerinnenring oder ein anderes fest an der Rotornabe angebrachtes Teil kontaktiert. Eine zweite, innere Dichtung, welche zwischen der Propellernabe und dem Zentralabschnitt des Propellerblatts abdichtet, kontaktiert auf ihrer äußeren Seite, bezogen auf die Längsachse des Propellerblatts, ebenfalls eine Komponente der Nabe, insbesondere einen die Innenringe tragenden hülsenförmigen Rotorblattträger. In bevorzugter Ausgestaltung wird die zuverlässige Dichtheit der Schmierstoffkammer bei einem durch Zentrifugalbeschleunigung erzeugten, bezogen auf die Rotationsachse der Propellernabe nach außen gerichteten, durch das Schmiermittel aufgebrachten hydraulischen Druck größer 10 bar ermöglicht.

Gemäß einer bevorzugten Weiterentwicklung ist der Außenring von einem mit der Nabe in Verbindung stehenden, beispielsweise direkt an der Nabe befestigten, konzentrisch zu den Lagerringen angeordneten Schutzring umgeben, welcher beispielsweise aus Stahlblech oder einem Verbundmaterial gefertigt sein kann. Dieser Schutzring kann in einem konzentrisch die Längsachse des Propellerblatts umgebenden Teilbereich von verstellbaren Komponenten der Propellerblattlagerung, insbesondere einem Flansch des Außenrings oder des Propellerblatts, derart gering beabstandet sein, dass hierdurch eine zusätzliche, nicht berührende Abdichtung gegeben ist.

Der hülsenförmige Zentralabschnitt des Propellerblatts, welcher einen Raum innerhalb der Lagerinnenringe einnimmt und eine innere Wandung der Schmierstoffkammer bildet, ist vorzugsweise eine Komponente einer Verstelleinrichtung zur Verstellung des Anstellwinkels des Propellerblatts. Die Übertragung eines Drehmoments, welches das Propellerblatt im Sinne einer Pitch-Verstellung um seine Längsachse verschwenkt, kann hierbei durch elektrische und/oder hydraulische Verstellmechanismen erfolgen.

Der Vorteil der Erfindung liegt insbesondere darin, dass die Propellerblattlagerung als vormontierte Einheit ausgebildet ist, die weitgehend ohne zusätzliche Einstelltätigkeit mit der Rotornabe und dem Propellerblatt verbunden werden kann. Dadurch, dass die Abdichtung des Ölraums, das heißt der Schmierstoffkammer, zwischen zueinander bewegten Teile relativ zur Rotorachse radial innerhalb der Wälzlagerung, nahe an Rotationsachse der Rotornabe, erfolgt, wirkt der hydraulische Druck des Öls bei Rotation nicht auf dynamische Dichtungen. Im einem hydraulischen Druck ausgesetzten Raum oberhalb der Wälzlagerung sind dagegen höchstens statische Dichtungen vorhanden.

### Kurze Beschreibung der Zeichnung

Nachfolgend wird ein Ausführungsbeispiel der Erfindung anhand einer Zeichnung näher erläutert. Hierin zeigt in einer vereinfachten Schnittdarstellung:

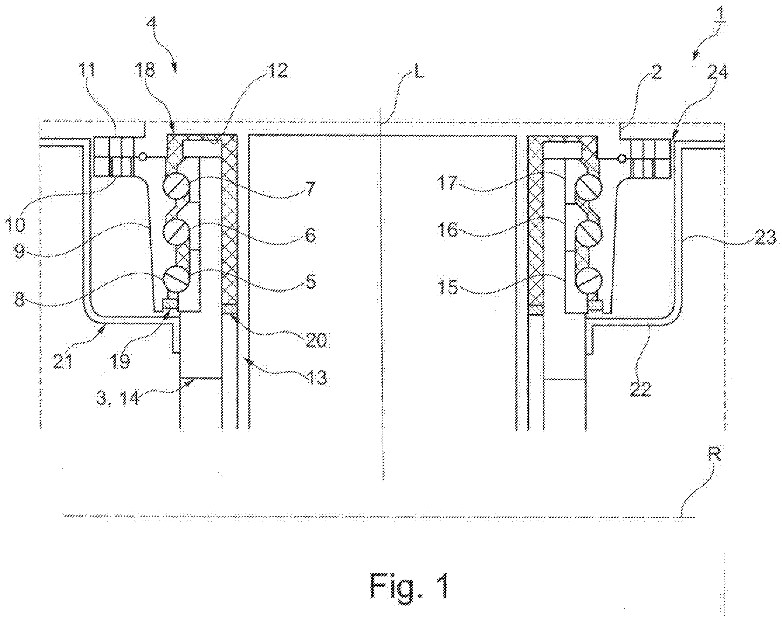

- Fig. 1: eine Propellerblattlagerung eines Flugzeugs.

### Ausführliche Beschreibung der Zeichnung

In Figur 1 ist schematisch eine insgesamt mit dem Bezugszeichen 1 gekennzeichnete Propellerblattlagerung eines nicht weiter dargestellten Flugzeugs gezeigt, hinsichtlich deren prinzipiellen Funktion auf den eingangs zitierten Stand der Technik verwiesen wird.

Die Propellerblattlagerung 1 dient der schwenkbaren Lagerung eines Propellerblatts 2 an einer Propellernabe 3. Die Rotationsachse der Propellernabe 3 ist mit R, die Längsachse des Propellerblatts 2 mit L bezeichnet. Zur Verstellung des Anstellwinkels des Propellerblatts 2 ist eine Wälzlagerung 4 vorgesehen, welche als dreireihiges Kugellager ausgebildet ist.

Die drei Reihen an Wälzkörpern der Wälzlagerung 4 sind als innere Reihe 5, mittlere Reihe 6, sowie äußere Reihe 7 bezeichnet. Die Wälzkörper, das heißt Kugeln, tragen einheitlich das Bezugszeichen 8. Die innere Reihe 5 weist den geringsten und die äußere Reihe 7 den größten Abstand von der Rotationsachse R der Propellernabe 3 auf. Von der Längsachse L des Propellerblatts 7, das heißt der zur Pitch-Verstellung genutzten Schwenkachse der Wälzlagerung 4, sind alle drei Reihen 5,6,7 an Wälzkörpern 8 gleich weit entfernt.

Die Wälzlagerung 4 ist als Schrägkugellager ausgebildet, welches einen einzigen Außenring 9 aufweist. An den Außenring 9 ist ein Flansch 10 einstückig angeformt, welcher am Propellerblatt 2 befestigt ist. Das Propellerblatt 2 weist zu diesem Zweck ebenfalls einen Befestigungsflansch 11 auf. Radial innerhalb des Befestigungsflansches 11, bezogen auf die Längsachse L, befindet sich eine ringförmige Stirnfläche 12 des Propellerblatts 2. Die Stirnfläche 12 ist radial nach innen, wiederum bezogen auf die Längsachse L, begrenzt durch einen hülsenformigen Zentralabschnitt 13, welcher eine Komponente des Propellerblatts 2 ist. Der Zentralabschnitt 13, der mit dem Propellerblatt 2 identisch oder zumindest fest verbunden ist, ist über einen nicht dargestellten Mechanismus zur Verstellung des Anstellwinkels der Propellerblätter 2 verdrehbar und stellt daher einen Verstellring einer nicht weiter dargestellten Verstelleinrichtung dar.

Zwischen dem Außenring 9 und dem Zentralabschnitt 13 ist ein nach außen durch die Stirnfläche 12 abgeschlossener Ringraum gebildet, in welchen ein hülsenförmiger, fest mit der Propellernabe 3 verbundener Rotorblattträger 14 hinein ragt. Auf den Rotorblattträger 14 sind drei Innenringe 15,16,17 aufgespannt, auf welchen die Kugelreihen 5,6,7 abrollen. Zwischen den Innenringen 15,16,17 und dem Außenring 9, zwischen dem die Innenringe 15,16,17 tragenden Rotorblattträger 14 und der Stirnfläche 12 des Propellerblatts 2, sowie zwischen dem Rotorblattträger 14 und dem Zentralabschnitt 13 ist eine zusammenhängende Schmierstoffkammer 18 gebildet.

Bei der Rotation der Propellernabe 3 wird der in der Schmierstoffkammer 18 befindliche Schmierstoff radial nach außen und damit gegen die geschlossene Stirnfläche 12 gedrückt. Um auch beim Stillstand der Propellernabe 3 ein Ausfließen von Schmierstoff aus der Schmierstoffkammer 18 zu verhindern, ist diese radial nach innen, bezogen auf die Rotationsachse R, abgeschlossen durch eine äußere Dichtung 19, welche zwischen dem Außenring 9 und dem innersten Innenring 15 abdichtet, sowie durch eine innere Dichtung 20, welche zwischen dem Rotorblattträger 14 und dem Zentralabschnitt 13 abdichtet. Die gesamte Wälzlagerung 4 ist abgedeckt durch einen Schutzring 21, welcher am Rotorblattträger 14 befestigt ist. Der Schutzring 21 weist in der Schnittdarstellung nach Fig. 1 eine abgewinkelte Form mit einem flachen, in einer zur Längsachse L normalen Ebene liegenden Scheibenabschnitt 22 und einem an diesen anschließenden zylindrischen Wandungsabschnitt 23 auf. Der Wandungsabschnitt 23 umschließt den Flansch 10 des Außenrings 9 sowie den Befestigungsflansch 11 unter Bildung eines Ringspaltes 24, welcher einen Schutz gegen Eindringen von Fremdkörpern in die Propellerblattlagerung 1 darstellt.

Die Gestaltung der Lagerringe 9,15,16,17 der Wälzlagerung 4 ist auf die beim Betrieb auftretenden aerodynamischen Kräfte sowie Massenkräfte abgestimmt. Die innere und mittlere Kugelreihe 5,6 sind als Komponenten eines zweireihigen Schrägkugellagers in O-Anordnung innerhalb der Wälzlagerung 4 ausgebildet. Damit stützt die mittlere Kugelreihe 6 das Propellerblatt 2 in radialer Richtung, bezogen auf die Rotationsachse R, nach außen ab, während durch die innere Kugelreihe 5 eine Abstützung nach innen gegeben ist. Die Einbausituation der äußeren Kugelreihe 7 entspricht, was die Ausrichtung der durch die Wälzkörper 8 gehenden Drucklinien entspricht, der Einbausituation der mittleren Kugelreihe 6. Damit ist durch die dreireihige Wälzlagerung 4 insgesamt eine zweifache Abstützung des Propellerblatts 2 nach außen und eine einfache Abstützung nach innen gegeben.

Die Wälzkörper 8 sowie die Wälzkontaktflächen der Lagerringe 9,15,16,17, auf denen die Wälzkörper 8 abrollen, sind beim Betrieb des die Propellerblattlagerung 1 aufweisenden Flugzeugs, nämlich Flugzeugs mit Propfan-Antrieb, verschiedensten Belastungen, auch durch Vibrationen, ausgesetzt. Die entsprechend diesen Belastungen ausgelegten Wälzkörper 8 können aus durchgehärtetem Wälzlagerstahl oder aus einer Hochleistungskeramik gefertigt sein. Für die Fertigung der Lagerringe 9,15,16,17 sind durchgehärtete oder randschichtgehärtete Wälzlagerstähle geeignet. Der Werkstoff, aus welchem der Außenring 9 gefertigt ist, ist nicht notwendigerweise mit dem Werkstoff, aus welchem die Innenringe, 15,16,17 gefertigt sind, identisch. Die Lagerringe 9,15,16,17 können zumindest teilweise, im Bereich der Wälzkontakte, mit einer verschleißbeständigen Beschichtung versehen sein.

Die Propellerblattlagerung 1 ist nicht nur für Propfan-Triebwerke sondern beispielsweise auch für Turboprop-Triebwerke von Flugzeugen geeignet. Ein besonderer Vorteil der Propellerblattlagerung 1 liegt in jedem Fall darin, dass diese zu Prüfungs- und Wartungszwecken sehr gut zugänglich ist.

### Bezugszahlenliste

- 1: Propellerblattlagerung
- 2: Propellerblatt
- 3: Propellernabe
- 4: Wälzlagerung
- 5: innere Kugelreihe
- 6: mittlere Kugelreihe
- 7: äußere Kugelreihe
- 8: Wälzkörper
- 9: Außenring
- 10: Flansch
- 11: Befestigungsflansch
- 12: Stirnfläche
- 13: Zentralabschnitt
- 14: Rotorblattträger
- 15: Innenring
- 16: Innenring
- 17: Innenring
- 18: Schmierstoffkammer
- 19: Dichtung
- 20: Dichtung
- 21: Schutzring
- 22: Scheibenabschnitt
- 23: Wandungsabschnitt
- 24: Ringspalt

- L: Längsachse
- R: Rotationsachse

## Patentansprüche

1. Propellerblattlagerung, mit einer Propellernabe (3), einem Propellerblatt (2) und einer Wälzlagerung (4) zwischen der Propellernabe (3) und dem Propellerblatt (2), wobei
- mindestens ein Lageraußenring (9) drehfest mit dem Propellerblatt (2) verbunden ist,
- mindestens ein Lagerinnenring (15,16,17) an der Propellernabe (3) gehalten ist,
- ein mit dem Propellerblatt (2) verbundener hülsenförmiger Zentralabschnitt (13) radial innerhalb des Lagerinnenrings (15,16,17) angeordnet ist,
- zwischen dem Lageraußenring (9) und dem Zentralabschnitt (13) eine in Radialrichtung, bezogen auf die Rotationsachse (R) der Propellernabe (3), nach außen hin geschlossene Schmierstoffkammer (18) gebildet ist.

2. Propellerblattlagerung nach Anspruch 1, **dadurch gekennzeichnet, dass** die Wälzlagerung (4) als mindestens dreireihiges Lager, insbesondere Kugellager, ausgebildet ist.

3. Propellerblattlagerung nach Anspruch 2, **dadurch gekennzeichnet, dass** die von der Rotationsachse (R) der Propellernabe (3) am geringsten beabstandete Reihe (5) an Wälzkörpern (8) des Wälzlagers (4) zusammen mit der dieser benachbarten, zweiten Reihe (6) an Wälzkörpern (8) und den zugehörigen Lagerringen (15,16) eine O-Anordnung bildet, während mindestens eine weitere, von der Propellernabe (3) weiter entfernte Reihe (7) an Wälzkörpern (8) unter einem Druckwinkel zwischen den Lagerringen (9,17) angeordnet ist, dessen Ausrichtung dem Druckwinkel der zweiten Reihe (6) an Wälzkörpern (8) entspricht.

4. Propellerblattlagerung nach einem der Ansprüche 1 bis 3, **dadurch gekennzeichnet, dass** die Wälzlagerung einen einzigen Außenring (9) und mehrere Innenringe (15,16,17) aufweist.

5. Propellerblattlagerung nach einem der Ansprüche 1 bis 4, **dadurch gekennzeichnet, dass** die Schmierstoffkammer (18) auf ihrer radial inneren Seite durch eine erste, zwischen dem Außenring (9) und der Propellernabe (3) angeordnete Dichtung (19), sowie durch eine zweite, zwischen der Propellernabe (3) und dem Zentralabschnitt (13) des Propellerblatts (2) angeordnete Dichtung (20) abgedichtet ist.

6. Propellerblattlagerung nach Anspruch 5, **dadurch gekennzeichnet, dass** die Schmierstoffkammer (18) derart ausgebildet ist, dass deren Dichtheit bei einem durch Zentrifugalbeschleunigung erzeugten, bezogen auf die Rotationsachse (R) der Propellernabe (3) nach außen gerichteten hydraulischen Druck von mindestens 10 bar gegeben ist.

7. Propellerblattlagerung nach Anspruch 5 oder 6, **dadurch gekennzeichnet, dass** die erste Dichtung (19) einen Innenring (15) der Wälzlagerung (4) kontaktiert.

8. Propellerblattlagerung nach einem der Ansprüche 5 bis 7, **dadurch gekennzeichnet, dass** die zweite Dichtung (20) einen den Innenring (15,16,17) tragenden hülsenförmigen Rotorblattträger (14) kontaktiert.

9. Propellerblattlagerung nach einem der Ansprüche 1 bis 8, **dadurch gekennzeichnet, dass** der Außenring (9) von einem mit der Propellernabe (3) in Verbindung stehenden, konzentrisch zu den Lagerringen (9,15,16,17) angeordneten Schutzring (21) umgeben ist.

10. Propellerblattlagerung nach einem der Ansprüche 1 bis 9, **dadurch gekennzeichnet, dass** der Zentralabschnitt (13) des Propellerblatts (2) als Teil einer Verstelleinrichtung zur Verstellung des Anstellwinkels des Propellerblatts (2) ausgebildet ist.

11. Propellerblattlagerung nach einem der Ansprüche 1 bis 10, **dadurch gekennzeichnet, dass** an den Lageraußenring (9) einstückig ein mit dem Propellerblatt (2) verbindbarer Flansch (11) angeformt ist.

12. Propellerblattlagerung nach einem der Ansprüche 1 bis 11, **dadurch gekennzeichnet, dass** der Lageraußenring (9) aus Stahl gefertigt ist und eine Härte von 300 bis 500 HV1 sowie randschichtgehärtete Wälzkontaktflächen mit einer Härte von mehr als 700 HV1 aufweist.

13. Propellerblattlagerung nach einem der Ansprüche 1 bis 12, **dadurch gekennzeichnet, dass** der Lageraußenring (9) eine partielle Korrosionsschutzbeschichtung aufweist.

14. Propellerblattlagerung nach einem der Ansprüche 1 bis 13, **dadurch gekennzeichnet, dass** innerhalb der Wälzlagerung (4) in einer Reihe (5,6,7) angeordnete Wälzkörper (8) durch Elemente aus synthetischem Material voneinander getrennt gehalten werden.

15. Propellerblattlagerung nach einem der Ansprüche 1 bis 14, **dadurch gekennzeichnet, dass** mindestens eine Wälzkontaktfläche des Lageraußenrings (9), der Lagerinnenringe (5,6,7) und der Wälzkörper (8) eine Verschleißschutzschicht aufweist.

## Claims

1. Propeller blade bearing having a propeller hub (3), a propeller blade (2) and a rolling element bearing (4) between the propeller hub (3) and the propeller blade (2), wherein
- at least one bearing outer ring (9) is secured in rotation with the propeller blade (2),
- at least one bearing inner ring (15, 16, 17) is retained on the propeller hub (3),
- a sleeve-shaped central section (13), connected to the propeller blade (2), is arranged radially inside the bearing inner ring (15, 16, 17),
- between the bearing outer ring (9) and the central section (13), there is formed a lubricant chamber (18) which is closed in the radially outward direction in relation to the axis of rotation (R) of the propeller hub (3).

2. Propeller blade bearing according to Claim 1, **characterized in that** the rolling element bearing (4) is in the form of a bearing, in particular a ball bearing, having at least three rows.

3. Propeller blade bearing according to Claim 2, **characterized in that** that row (5) of rolling elements (8) of the rolling element bearing (4) that is closest to the axis of rotation (R) of the propeller hub (3) forms, together with the adjacent second row (6) of rolling elements (8) and the associated bearing rings (15, 16), an O arrangement while the at least one other row (7) of rolling elements (8), which is further from the propeller hub (3), is arranged at a pressure angle between the bearing rings (9, 17), the orientation of which corresponds to the pressure angle of the second row (6) of rolling elements (8).

4. Propeller blade bearing according to one of Claims 1 to 3, **characterized in that** the rolling element bearing has a single outer ring (9) and multiple inner rings (15, 16, 17).

5. Propeller blade bearing according to one of, Claims 1 to 4, **characterized in that** the lubricant chamber (18) is sealed on its radially inner side by a first seal (19) arranged between the outer ring (9) and the propeller hub (3), and by a second seal (20) arranged between the propeller hub (3) and the central section (13) of the propeller blade (2).

6. Propeller blade bearing according to Claim 5, **characterized in that** the lubricant chamber (18) is designed such that it is tight to an outward hydraulic pressure, generated by centrifugal acceleration in relation to the axis of rotation (R) of the propeller hub (3), of at least 10 bar.

7. Propeller blade bearing according to Claim 5 or 6, **characterized in that** the first seal (19) makes contact with an inner ring (15) of the rolling element bearing (4).

8. Propeller blade bearing according to one of Claims 5 to 7, **characterized in that** the second seal (20) makes contact with a sleeve-shaped rotor blade support (14) that bears the inner ruing (15,16, 17).

9. Propeller blade bearing according to one of Claims 1 to 8, **characterized in that** the outer ring (9) is surrounded by a shield ring (21) that is connected to the propeller hub (3) and is arranged concentric with the bearing rings (9, 15, 16, 17).

10. Propeller blade bearing according to one of Claims 1 to 9, **characterized in that** the central section (13) of the propeller blade (2) is designed as part of an adjustment device for adjusting the angle of attack of the propeller blade (2).

11. Propeller blade bearing according to one of Claims 1 to 10, **characterized in that** a flange (11) that can be connected to the propeller blade (2) is formed on and in one piece with the bearing outer ring (9).

12. Propeller blade bearing according to one of Claims 1 to 11, **characterized in that** the bearing outer ring (9) is made of steel and has a hardness of 300 to 500 HV1, and surface-hardened rolling contact surfaces with a hardness of greater than 700 HV1.

13. Propeller blade bearing according to one of Claims 1 to 12, **characterized in that** the bearing outer ring (9) has a partial corrosion protection coating.

14. Propeller blade bearing according to one of Claims 1 to 13, **characterized in that**, within the rolling element bearing (4), rolling elements (8) arranged in a row (5, 6, 7) are held separate from one another by elements made of synthetic material.

15. Propeller blade bearing according to one of Claims 1 to 14, **characterized in that** at least one rolling contact surface of the bearing outer ring (9), of the bearing inner rings (5, 6, 7) and of the rolling elements (8) has a wear protection layer.

## Revendications

1. Roulement de pale d'hélice, comprenant un moyeu d'hélice (3), une pale d'hélice (2) et un palier à roulement (4) entre le moyeu d'hélice (3) et la pale d'hélice (2),
- au moins une bague extérieure de palier (9) étant connectée de manière solidaire en rotation à la pale d'hélice (2),
- au moins une bague intérieure de palier (15, 16, 17) étant retenue sur le moyeu d'hélice (3),
- une portion centrale (13) en forme de douille connectée à la pale d'hélice (2) étant disposée radialement à l'intérieur de la bague intérieure de palier (15, 16, 17),
- une chambre de lubrifiant (18) fermée vers l'extérieur dans la direction radiale par rapport, à l'axe de rotation (R) du moyeu d'hélice (3) étant formée entre la bague extérieure de palier (9) et la portion centrale (13) .

2. Roulement de pale d'hélice selon la revendication 1, **caractérisé en ce que** le palier à roulement (4) est réalisé sous forme de palier à au moins trois rangées, en particulier sous forme de roulement à billes.

3. Roulement de pale d'hélice selon la revendication 2, **caractérisé en ce que** la rangée (5) de corps de roulement (8) du palier à roulement (4) la moins éloignée de l'axe de rotation (R) du moyeu d'hélice (3) forme, conjointement avec la deuxième rangée (6) de corps de roulement (8) adjacente à celle-ci et avec les bagues de palier associées (15, 16), un agencement en forme de O tandis qu'au moins une autre rangée (7) de corps de roulement (8) plus éloignée du moyeu d'hélice (3) est disposée suivant un angle de pression entre les bagues de palier (9, 17), dont l'orientation correspond à l'angle de pression de la deuxième rangée (6) de corps de roulement (8).

4. Roulement de pale d'hélice selon l'une quelconque des revendications 1 à 3, **caractérisé en ce que** le palier à roulement présente une bague extérieure (9) et plusieurs bagues intérieures (15, 16, 17).

5. Roulement de pale d'hélice selon l'une quelconque des revendications 1 à 4, **caractérisé en ce que** la chambre de lubrifiant (18) est étanchéifiée sur son côté radialement interne par un premier joint d'étanchéité (19) disposé entre la bague extérieure (9) et le moyeu d'hélice (3) ainsi que par un deuxième joint d'étanchéité (20) disposé entre le moyeu d'hélice (3) et la portion centrale (13) de la pale d'hélice (2).

6. Roulement de pale d'hélice selon la revendication 5, **caractérisé en ce que** la chambre de lubrifiant (18) est réalisée de telle sorte que son étanchéité soit assurée pour une pression hydraulique d'au moins 10 bars générée par l'accélération centrifuge et orientée vers l'extérieur par rapport à l'axe de rotation (R) du moyeu d'hélice (3).

7. Roulement de pale d'hélice selon la revendication 5 ou 6, **caractérisé en ce que** le premier joint d'étanchéité (19) vient en contact avec une bague intérieure (15) du palier à roulement (4).

8. Roulement de pale d'hélice selon l'une quelconque des revendications 5 à 7, **caractérisé en ce que** le deuxième joint d'étanchéité (20) vient en contact avec un support de pale de rotor (14) en forme de douille portant la bague intérieure (15, 16, 17).

9. Roulement de pale d'hélice selon l'une quelconque des revendications 1 à 8, **caractérisé en ce que** la bague extérieure (9) est entourée par une bague de protection (21) en liaison avec le moyen d'hélice (3), disposée concentriquement par rapport aux bagues de palier (9, 15, 16, 17).

10. Roulement de pale d'hélice selon l'une quelconque des revendications 1 à 9, **caractérisé en ce que** la portion centrale (13) de la pale d'hélice (2) est réalisée sous forme de partie d'un dispositif de réglage pour régler l'angle d'attaque de la pale d'hélice (2).

11. Roulement de pale d'hélice selon l'une quelconque des revendications 1 à 10, **caractérisé en ce qu'**une bride (11) pouvant être connectée à la pale d'hélice (2) est formée d'une seule pièce sur la bague extérieure de palier (9).

12. Roulement de pale d'hélice selon l'une quelconque des revendications 1 à 11, **caractérisé en ce que** la bague extérieure de palier (9) est fabriquée en acier et présente une dureté de 300 à 500 HV1 ainsi que des surfaces de contact de roulement à couches superficielles trempées d'une dureté de plus de 700 HV1.

13. Roulement de pale d'hélice selon l'une quelconque des revendications 1 à 12, **caractérisé en ce que** la bague extérieure de palier (9) présente un revêtement partiel de protection anticorrosion.

14. Roulement de pale d'hélice selon l'une quelconque des revendications 1 à 13, **caractérisé en ce que** des corps de roulement (8) disposés à l'intérieur du palier à roulement (4) dans une rangée (5, 6, 7) sont maintenus séparés les uns des autres par des éléments en matière synthétique.

15. Roulement de pale d'hélice selon l'une quelconque des revendications 1 à 14, **caractérisé en ce qu'**au moins une surface de contact de roulement de la bague extérieure de palier (9), des bagues intérieures de palier (5, 6, 7) et des corps de roulement (8) présente une couche de protection contre l'usure.
